# EUROPEAN PATENT SPECIFICATION

(11) **EP 1 375 974 B1**
(45) Date of publication and mention of the grant of the patent: **29.08.2007**
(21) Application number: 03007839.8
(22) Date of filing: 05.04.2003
(51) Int. Cl.: F16H 59/04, F16H 61/36, F16H 63/20

(54) **Shifting apparatus for a transmission having a plurality of gear ratios**
Gangschaltungseinrichtung für ein Getriebe mit mehreren Übersetzungsverhältnissen
Dispositif de changement de vitesse pour une transmission avec plusieurs rapports de vitesse

(30) Priority: 04.06.2002 JP 2002163487
(43) Date of publication of application: 02.01.2004
(73) Proprietor: Kubota Corporation, Naniwa-ku, Osaka (JP)
(72) Inventor: Hasegawa, Koichi, c/o Kubota Corporation, Sakai-chi, Osaka (JP); Fujita, Hideo, c/o Kubota Corporation, Sakai-shi, Osaka (JP); Tsuji,Kenichiro, c/o Kubota Corporation, Sakai-shi, Osaka (JP); Owada, Toshinobu, c/o Kubota Corporation, Sakai-shi, Osaka (JP)
(74) Representative: Brommer, Hans Joachim

(56) References cited:
- EP-A- 0 251 807
- US-A- 2 197 938
- US-A- 4 129 046
- US-A- 4 152 950

## Description

### BACKGROUND OF THE INVENTION

### FIELD OF THE INVENTION

This invention relates to a shifting apparatus for shifting a transmission, such as of a tractor, having a plurality of gear ratios, according to the preamble of claims 1 and 3.

### DESCRIPTION OF THE RELATED ART

A tractor, for example, has a transmission mounted in a transmission case, and a shift lever rockable about a first axis or a second axis for shifting the transmission. A combination of rocking movement about the first axis and rocking movement about the second axis of this shift lever determines a gear ratio of the transmission. With such a conventional shifting apparatus, a first shaft providing the first axis and a second shaft providing the second axis are spaced away so that they do not cross each other. This arrangement requires a large support structure for the shift lever. Where the single shift lever produces six speeds, its rocking operation is complicated. Thus, it has been impossible to perform shifting operations easily and reliably with one shift lever.

A transmission with the features of the upper part of claims 1 and 3 is disclosed in US-A-4152950.

### SUMMARY OF THE INVENTION

Having regard to the disadvantage of the prior art noted above, an object of this invention is to provide a shifting apparatus in which a support structure for a shift lever is made as compact as possible. Another object of the invention is to provide a shifting apparatus for selectively producing gear ratios easily and reliably with a single shift lever.

One of the above objects is fulfilled, by the features of claim 1.

With this construction, the first shaft and the second shaft traverse each other to form a cross together. Consequently, the first shaft and the second shaft are located substantially on one plane to make the support structure for the shift lever very compact. Preferably, the first shaft and the second shaft formed integral with each other as a cross member.

For smoothly transmitting the rocking movement about the first axis and rocking movement about the second axis of the shift lever to a link mechanism, a connection to the side of the shift lever of a first interlocking member for transmitting the rocking movement about the first axis of the shift lever to the transmission is located on or adjacent the second shaft, and a connection to the side of the shift lever of a second interlocking member for transmitting the rocking movement about the second axis of the shift lever to the transmission is located on or adjacent the first shaft.

One of the above objects is fulfilled, by the features of claim 3.

With this shifting mechanism, the rocking movement about the first axis of the shift lever selects one of the shift forks to be controlled. The selected shift fork is operated by the rocking movement about the second axis of the shift lever. This rational construction allows the single shift lever to determine selectively a plurality of gear ratios easily and reliably.

Other features and advantages of this invention will be apparent from the following description of the embodiment to be taken with reference to the drawings.

### BRIEF DESCRIPTION OF THE DRAWINGS

Fig. 1 is a front view of a shift lever region of a shifting mechanism according to this invention;
Fig. 2 is a side view of the shift lever region;
Fig. 3 is a plan view of the shift lever region;
Fig. 4 is an enlarged front view of the shift lever region.
Fig. 5 is an enlarged side view of the shift lever region;
Fig. 6 is a sectional side view of a transmission case of a vehicle employing the shifting mechanism according to this invention;
Fig. 7 is a plan view of a shift rod and shift fork region;
Fig. 8 is a sectional front view of an interlocking shaft and lock mechanism region;
Fig. 9 is a sectional front view of an interlocking shaft and shift rod region;
Fig. 10 is a side view of a shift rod and shift fork controller region;
Fig. 11 is a plan view of a lid region of the transmission case; and
Fig. 12 is an explanatory view showing operating directions of the shift lever.

### DESCRIPTION OF THE PREFERRED EMBODIMENT

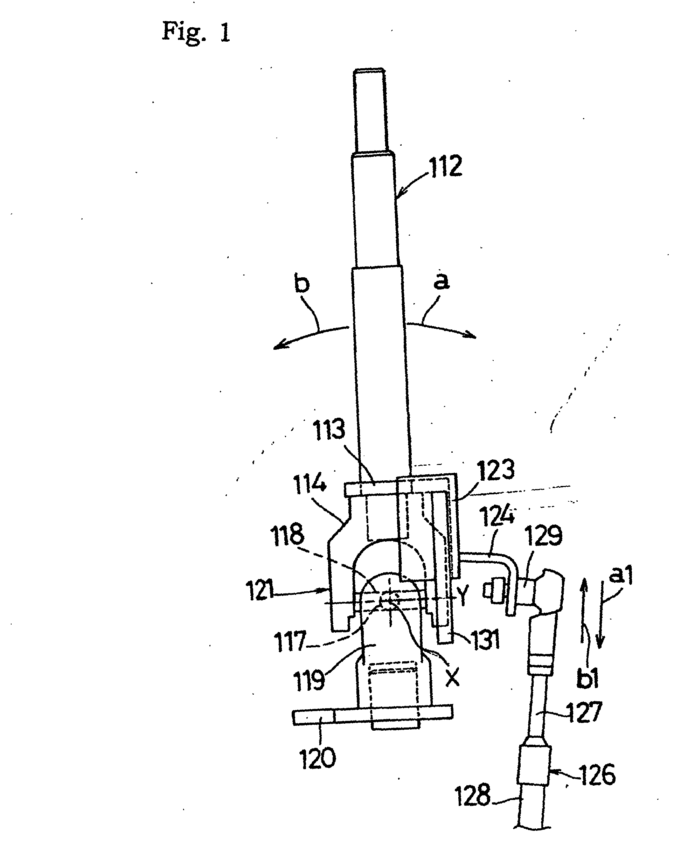

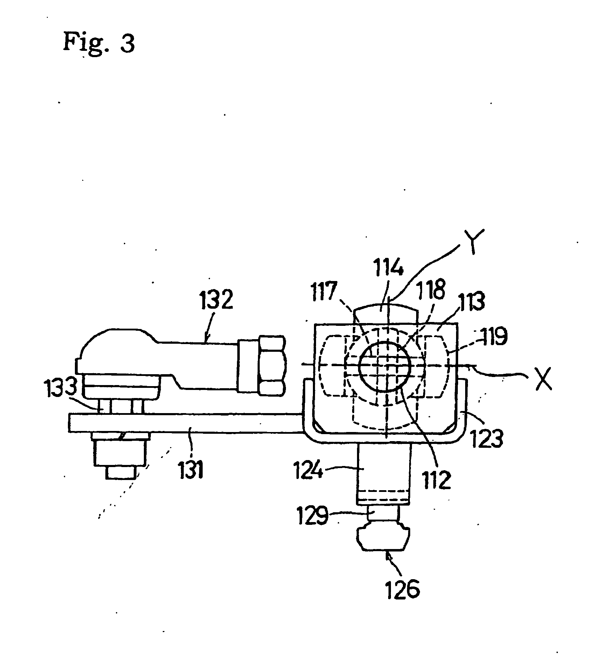

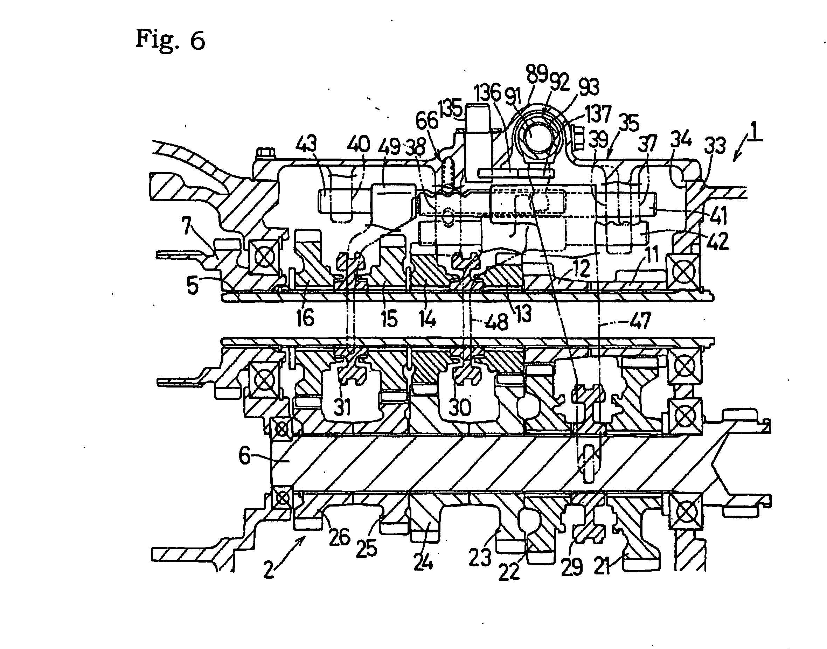

Figs. 1 through 6 show a shift lever 112 and its support structure of a shifting mechanism according to this invention. Fig. 6 shows a transmission case 1 housing a transmission 2 shiftable by the shifting mechanism. The transmission case 1 is fixed to the rear of an engine of a tractor acting as a working vehicle. The transmission case 1 serves as part of a tractor body. The transmission 2 changes the power of the engine to different speeds to be transmitted to rear wheels and front wheels.

The transmission case 1 supports, between partitions thereof a cylindrical drive shaft 5 and a driven shaft 6 to be rotatable about their respective axes. Engine power is transmitted to the drive shaft 5 through a drive gear 7 to rotate the drive shaft 5. Rotation of this drive shaft 5 is changed to different speeds in the transmission 2, and transmitted to the driven shaft 6. Rotation of the driven shaft 6 is transmitted to the rear wheels and front wheels.

The drive shaft 5 has a first speed drive gear 11 and a second speed drive gear 12 splined thereto so that the first speed drive gear 11 and second speed drive gear 12 are rotatable with the drive shaft 5. Further, a third speed drive gear 13, a fourth speed drive gear 14, a fifth speed drive gear 15 and a sixth speed drive gear 16 are freely rotatably mounted on the drive shaft 5.

The driven shaft 6 has a first speed driven gear 21 and a second speed driven gear 22 freely rotatably mounted thereon. Further, the driven shaft 6 has a third speed driven gear 23, a fourth speed driven gear 24, a fifth speed driven gear 25 and a sixth speed driven gear 26 splined thereto, so that the third speed driven gear 23, fourth speed driven gear 24, fifth speed driven gear 25 and sixth speed driven gear 26 are rotatable with the driven shaft 6.

A first shifter 29 is mounted on the driven shaft 6 between the first speed driven gear 21 and second speed driven gear 22 to be axially slidable through spline engagement. A second shifter 30 is mounted on the drive shaft 5 between the third speed drive gear 13 and fourth speed drive gear 14 to be axially slidable through spline engagement. A third shifter 31 is mounted on the drive shaft 5 between the fifth speed drive gear 15 and sixth speed drive gear 16 to be axially slidable through spline engagement.

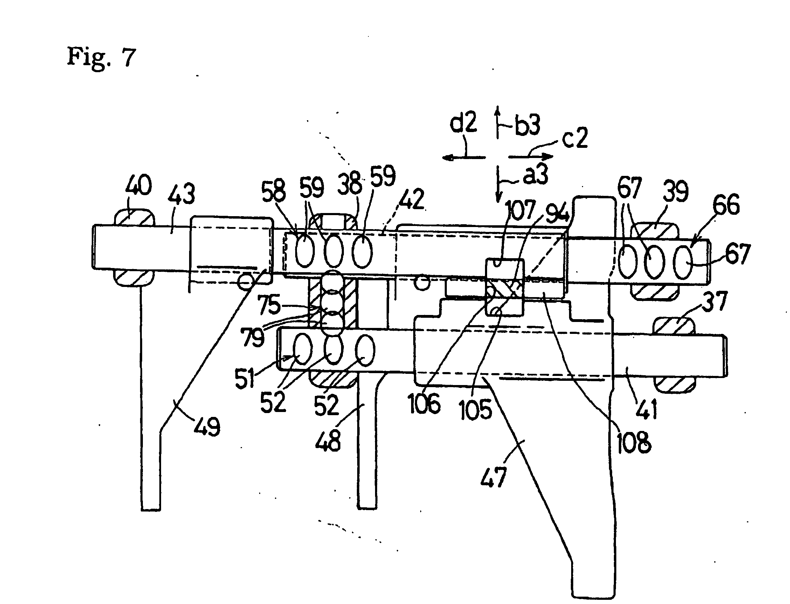

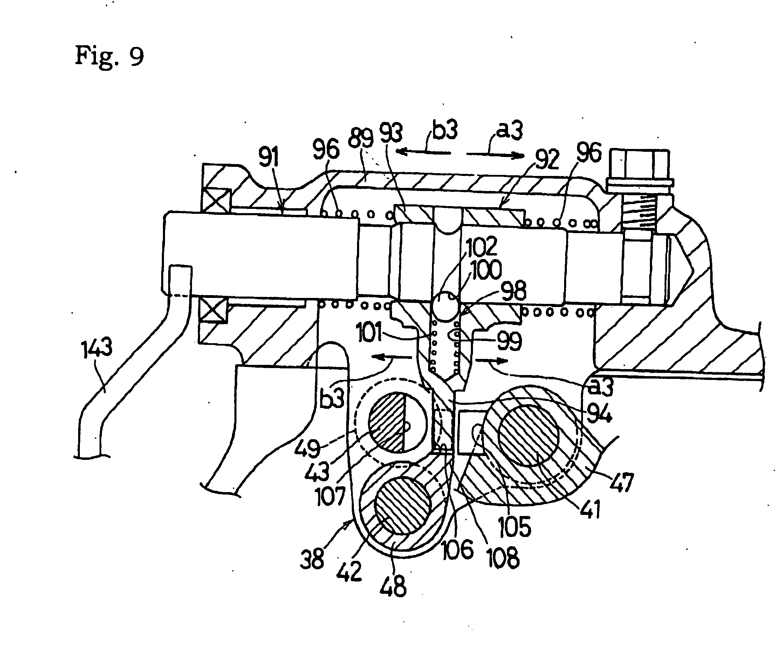

Reference is made to Figs. 6 through 10. The transmission case 1 has an upper wall 33 defining an opening 34, and a lid 35 detachably attached to the upper wall 33 for closing the opening 34. The lid 35 has supporters 37, 38, 39 and 40 depending therefrom. A first shift rod 41 is held between the supporters 37 and 38 to be slidable back and forth. A second shift rod 42 is held between the supporters 39 and 38 to be slidable back and forth. A third shift rod 43 is held between the supporters 38 and 40 to be slidable back and forth.

The first shift rod 41 and third shift rod 43 are arranged side by side at substantially the same height to extend in the fore and aft direction. A second shift rod 42 is disposed below the first shift rod 41 and coextensive in the fore and aft direction in a vertical relationship with the third shift rod 43.

The first shift rod 41 has a first shift fork 47 fixedly mounted thereon and engaged with the first shifter 29. The first shift fork 47 is slidable (in shifting action) with the first shift rod 41 from a neutral position to a rearward, first speed position and a forward, second speed position. With movement of the first shift rod 41 (first shift fork 47) from the neutral position to the first speed position, the first shifter 29 moves from a neutral position to a rearward, first speed position to mesh with the first speed driven gear 21. Then, rotation of the drive shaft 5 is transmitted to the driven shaft 6 through the first speed drive gear 11, first speed driven gear 21 and first shifter 29 to rotate the driven shaft 6 at a first speed. With movement of the first shift rod 41 (first shift fork 47) from the neutral position to the second speed position, the first shifter 29 moves from the neutral position to a forward, second speed position to mesh with the second speed driven gear 22. Then, rotation of the drive shaft 5 is transmitted to the driven shaft 6 through the second speed drive gear 12, second speed driven gear 22 and second shifter 29 to rotate the driven shaft 6 at a second speed.

The second shift rod 42 has a second shift fork 48 fixedly mounted thereon and engaged with the second shifter 30. The second shift fork 48 is slidable (in shifting action) with the second shift rod 42 from a neutral position to a rearward, third speed position and a forward, fourth speed position. With movement of the second shift rod 42 (second shift fork 48) from the neutral position to the third speed position, the second shifter 30 moves from a neutral position rearward to mesh with the third speed drive gear 13. Then, rotation of the drive shaft 5 is transmitted to the driven shaft 6 through the second shifter 30, third speed drive gear 13 and third speed driven gear 23 and to rotate the driven shaft 6 at a third speed. With movement of the second shift rod 42 (second shift fork 48) from the neutral position to the fourth speed position, the second shifter 30 moves from the neutral position forward to mesh with the fourth speed drive gear 14. Then, rotation of the drive shaft 5 is transmitted to the driven shaft 6 through the second shifter 30, fourth speed drive gear 14 and fourth speed driven gear 24 to rotate the driven shaft 6 at a fourth speed.

The third shift rod 43 has a third shift fork 49 fixedly mounted thereon and engaged with the third shifter 31. The third shift fork 49 is slidable (in shifting action) with the third shift rod 43 from a neutral position to a rearward, fifth speed position and a forward, sixth speed position. With movement of the third shift rod 43 (third shift fork 49) from the neutral position to the fifth speed position, the third shifter 31 moves from a neutral position rearward to mesh with the fifth speed drive gear 15. Then, rotation of the drive shaft 5 is transmitted to the driven shaft 6 through the third shifter 31, fifth speed drive gear 15 and fifth speed driven gear 25 and to rotate the driven shaft 6 at a fifth speed. With movement of the third shift rod 43 (third shift fork 49) from the neutral position to the sixth speed position, the third shifter 31 moves from the neutral position forward to mesh with the sixth speed drive gear 16. Then, rotation of the drive shaft 5 is transmitted to the driven shaft 6 through the third shifter 31, sixth speed drive gear 16 and sixth speed driven gear 26 to rotate the driven shaft 6 at a sixth speed.

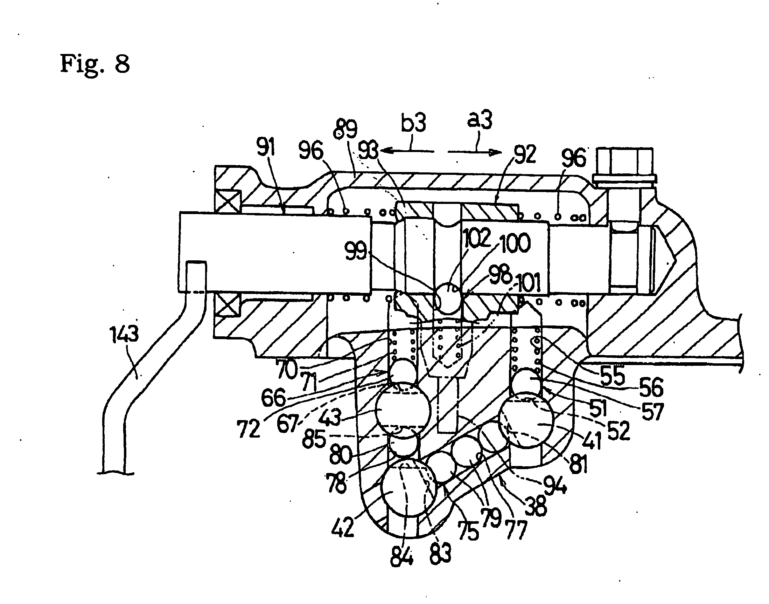

As shown in Fig. 8, a first positioning mechanism 51 is provided between the first shift rod 41 and supporter 38 for positioning the first shift rod 41 to the neutral position, rearward first speed position and forward second speed position. The first positioning mechanism 51 includes three positioning recesses 52 formed in the first shift rod 41, a holding bore 55 formed in the supporter 38, a pressing spring 56 mounted in the holding bore 55, and a ball 57 for selectively fitting into the positioning recesses 52.

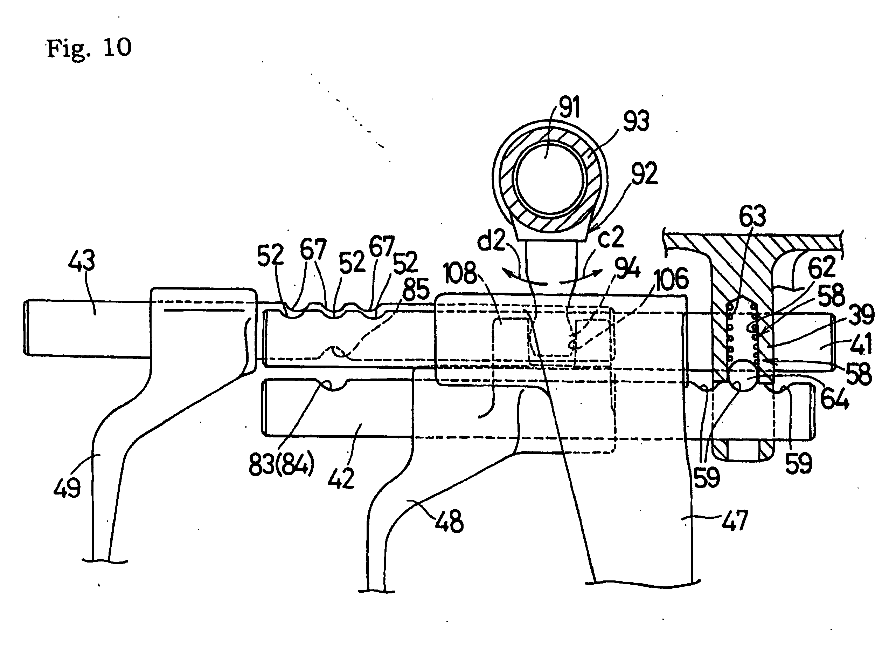

As shown in Fig. 10, a second positioning mechanism 58 is provided between the second shift rod 42 and supporter 39 for positioning the second shift rod 42 to the neutral position, rearward third speed position and forward fourth speed position. The second positioning mechanism 58 includes three positioning recesses 59 formed in the second shift rod 42, a holding bore 62 formed in the supporter 39, a pressing spring 63 mounted in the holding bore 62, and a ball 64 for selectively fitting into the positioning recesses 59.

As shown in Fig. 8, a third positioning mechanism 66 is provided between the third shift rod 43 and supporter 38 for positioning the third shift rod 43 to the neutral position, rearward fifth speed position and forward sixth speed position. The third positioning mechanism 66 includes three positioning recesses 67 formed in the third shift rod 43, a holding bore 70 formed in the supporter 38, a pressing spring 71 mounted in the holding bore 70, and a ball 72 for selectively fitting into the positioning recesses 67.

A lock mechanism 75 is provided between the first shift rod 41, second shift rod 42 and third shift rod 43. When one of the first shift fork 47, second shift fork 48 and third shift fork 49 is operated from the neutral position to one of the speed positions, the lock mechanism 75 locks the other shift forks against movement from the neutral position to the speed positions.

The lock mechanism 75 includes a first communicating bore 77 formed in the supporter 38 between the first shift rod 41 and second shift rod 42, a second communicating bore 78 formed in the supporter 38 between the second shift rod 42 and the third shift rod 43, three balls 79 mounted in the first communicating bore 77, a ball 80 mounted to the second communicating bore 78, a first engaging recess 81 formed in the first shift rod 41, two second engaging recesses 83 and 84 formed in the second shift rod 42, and a third engaging recess 85 formed in the third shift rod 43. When the first shift rod 41 moves from the neutral position to the first speed position or second speed position, one of the balls 79 becomes disengaged from the first engaging recess 81 of the first shift rod 41, and another of the balls 79 engages the second engaging recess 83 of the second shift rod 42. The second shift rod 42 is thereby locked immovable from the neutral position to the third speed position or fourth speed position.

When the second shift rod 42 moves from the neutral position to the third speed position or fourth speed position, the ball 79 becomes disengaged from the second engaging recess 83 of the second shift rod 42, and the other ball 79 engages the first engaging recess 81 of the first shift rod 41, and the ball 80 becomes disengaged from the second engaging recess 84 of the second shift rod 42 and engages the third engaging recess 85 of the third shift rod 43. The first shift rod 41 is thereby locked immovable from the neutral position to the first speed position or second speed position, and the third shift rod 43 immovable from the neutral position to the fifth speed position or sixth speed position.

When the third shift rod 43 moves from the neutral position to the fifth speed position or sixth speed position, the ball 80 becomes disengaged from the third engaging recess 85 of the third shift rod 43 and engages the second engaging recess 84 of the second shift rod 42. The second shift rod 42 is thereby locked immovable from the neutral position to the third speed position or fourth speed position.

As shown in Figs. 6, 8 and 9, the lid 35 defines a holder section 89 in the shape of a half cylinder bulging upward and extending transversely of the tractor. An interlocking shaft 91 is mounted in the holder section 89 to extend in the transverse direction and to be rotatable about its own axis. The interlocking shaft 91 has a shift fork control unit 92 mounted thereon. The shift fork control unit 92 has a cylindrical mounting tube 93, and a control element 94 projecting downward from the mounting tube 93. The mounting tube 93 is mounted on the interlocking shaft 91 to be slidable right and left and not to be rotatable thereon.

The shift fork control unit 92 is biased by two pressing springs 96 toward the middle position axially of the interlocking shaft 91. Thus, the shift fork control unit 92 is prevented from inadvertently sliding axially outwardly of the interlocking shaft 91. Further, a positioning mechanism 98 is provided between the interlocking shaft 91 and shift fork control unit 92 for positioning the shift fork control unit 92 transversely of the tractor body. The positioning mechanism 98 includes a holding bore 99 formed in the shift fork control unit 92, an annular engaging groove 100 formed in the interlocking shaft 91, a pressing spring 101 mounted in the holding bore 99, and a ball mounted in the holding bore 99. With the ball 102 engaging the engaging groove 100 under the biasing force of the pressing spring 101, the shift fork control unit 92 is positioned transversely of the tractor body relative to the interlocking shaft 91, in which the shift fork control unit 92 engages a second engagement part 106 to be described hereinafter.

The shift fork control unit 92 is slidable back and forth (fork-selecting directions) on the interlocking shaft 91, and pivotable for and aft (fork operating directions) about the axis of the interlocking shaft 91.

As shown in Figs. 6, 7, 9 and 10, the first shift fork 47 has a first engagement part 105 engageable by the shift fork control unit 92. The first engagement part 105 is a recess formed in an upper left portion at the proximal end of the first shift fork 47. The third shift rod 43 has a third engagement part 105 engageable by the shift fork control unit 92. The third engagement part 105 is a recess formed in a right portion of the third shift rod 43. The third engagement part 107 is opposed to the first engagement part 105. The second shift fork 48 has an engagement piece 108 projecting upward. The engagement piece 108 is disposed between the first engagement part 105 of the first shift fork 47 and the third engagement part 107 of the third shift fork 49. The engagement piece 108 defines the second engagement part 106 engageable by the shift fork control unit 92. The second engagement part 105 is a downward recess formed at an upper end of the engagement piece 108.

Thus, the first engagement part 105 of the first shift fork 47, the second engagement part 106 of the second shift fork 48 and the third engagement part 107 of the third shift fork 49 are aligned in the fork-selecting (right and left) direction of the shift fork control unit 92. The shift fork control unit 92 is movable right and left for engaging one of the first engagement part 105, second engagement part 106 and third engagement part 107.

Reference is made to Figs. 1 through 6. The tractor has one shift lever 112 disposed on a control panel or the like for shifting the transmission 2. The shift lever 112 extends upward from a U-shaped rocking support member 114 through a mounting plate 113. The rocking support member 114 is attached to a fixed component such as the control panel of the tractor through a first shaft 117, a second shaft 118, a U-shaped fixed support member 119 and a mounting plate 120.

The mounting plate 120 is fixed to the control panel or the like. The fixed support member 119 is fixed such as by welding to the mounting plate 120. The first shaft 117 having a first axis X and the second shaft 118 having a second axis Y are integrated into a cross shape. The first axis X and second axis Y are located on one plane. The first shaft 117 is rotatably supported by the fixed support member 119. The second shaft 118 is rotatably supported by the rocking support member 114.

Thus, the rocking support member 114, fixed support member 119, first shaft 117 and second shaft 118 constitute a universal joint 121. The shift lever 112 is supported to be rockable about the first axis X and second axis Y arranged to cross each other.

A channel-like interlocking member 123 is fixed such as by welding to the mounting plate 113. An L-shaped first connector 124 projects from the interlocking member 123. A first interlocking member 126 is connected to the first connector 124 for transmitting a rocking movement about the first axis X of the shift lever 112 to the transmission 2. The first interlocking member 126 is in the form of a Bowden cable having an inner wire 127 and an outer wire 108, for example. A connection 129 of the first interlocking member 126 to the side of the shift lever 112 is located on or adjacent the second shaft 118.

When, as shown in Fig. 1, the shift lever 112 is rocked in the direction of arrow "a" (e.g. left) about the first axis X, the first interlocking member 126 moves in the direction arrow a1. When the shift lever 112 is rocked in the direction of arrow "b" (e.g. right) about the first axis X, the first interlocking member 126 moves in the direction arrow b1.

A plate-like second connector 131 extends rearward and downward from the interlocking member 123. A second interlocking member 132 is connected to the second connector 131 for transmitting a rocking movement about the second axis Y of the shift lever 112 to the transmission 2. The second interlocking member 132 is in the form of a Bowden cable, a coupling rod or the like. A connection 133 of the second interlocking member 132 to the side of the shift lever 112 is located on or adjacent the first shaft 117.

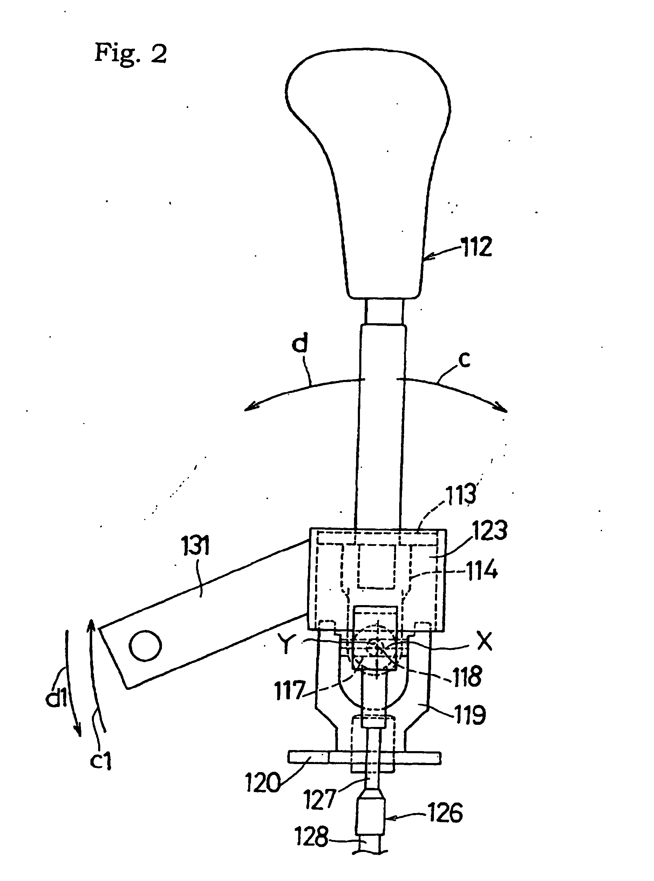

When, as shown in Fig. 2, the shift lever 112 is rocked in the direction of arrow "c" (e.g. forward) about the second axis Y, the second interlocking member 132 moves in the direction of arrow c1. When the shift lever 112 is rocked in the direction of arrow "d" (e.g. rearward) about the second axis Y, the second interlocking member 132 moves in the direction of arrow d1.

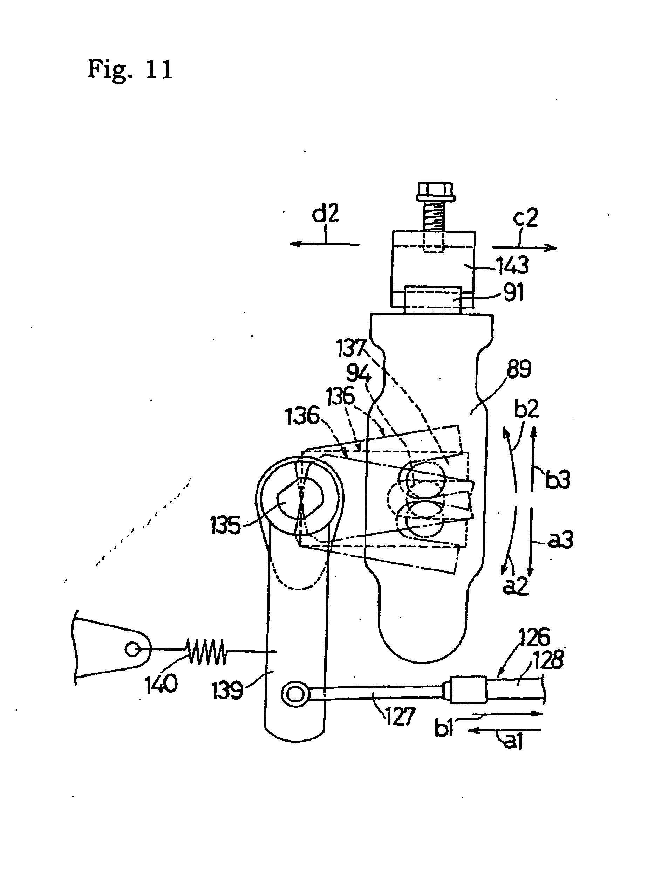

As shown in Figs. 6 and 11, a fork selecting shaft 135 is disposed to extend vertically in a position slightly forwardly of the holder section 89 of the lid 35. This fork selecting shaft 135 is supported by the lid 35 to be rotatable about a vertical axis. The connecting rod 136 extends rearward from a lower end of the fork selecting shaft 135. The connecting rod 136 has a bifurcate rear end 137. The bifurcate end 137 receives and pinches an upper part of the control element 94 of the shift fork control unit 92.

An interlocking rod 139 is mounted on and fixed to an upper end of the fork selecting shaft 135. The interlocking rod 139 extends leftward along the upper surface of lid 35 from the fork selecting shaft 135. The interlocking rod 139 is biased forward at a position adjacent a distal end thereof by a tension spring 140. The other end of the first interlocking member 126 is connected to the distal end of the interlocking rod 139.

Thus, the first connector 124 of the shift lever 112 and the interlocking rod 139 of the fork selecting shaft 135 are operatively connected through the first interlocking member 126. When the shift lever 112 is rocked about the first shaft 117, the first interlocking member 126 reciprocates in the directions of arrows a1 and b1. This causes the fork selecting shaft 135 to rotate about its axis back and forth in directions of arrows a2 and b2. As a result, the connecting rod 136 swings in the same directions as above, to reciprocate the shift fork control unit 92 in directions of arrows a3 and b3 (the right and left, fork selecting directions).

As shown in Figs. 8, 9 and 11, one end of the interlocking shaft 91 projects from the holder section 89. An interlocking rod 143 extends from the outer end of interlocking shaft 91 to be connected to the other end of the second interlocking member 132.

Thus, the second connector 131 of the shift lever 112 and the interlocking rod 143 of the interlocking shaft 91 are operatively connected through the second interlocking member 132. When the shift lever 112 is rocked about the second shaft 118, the second interlocking member 132 reciprocates in the directions of arrows c1 and d1. This causes the interlocking rod 143 to pivot in directions of arrow c2 and the d2 about the interlocking shaft 91, and the interlocking shaft 91 to rotate back and forth in the same directions. As a result, the shift fork control unit 92 swings back and forth in the directions of arrows c2 and d2 (fork operating directions) about the axis of the interlocking shaft 91.

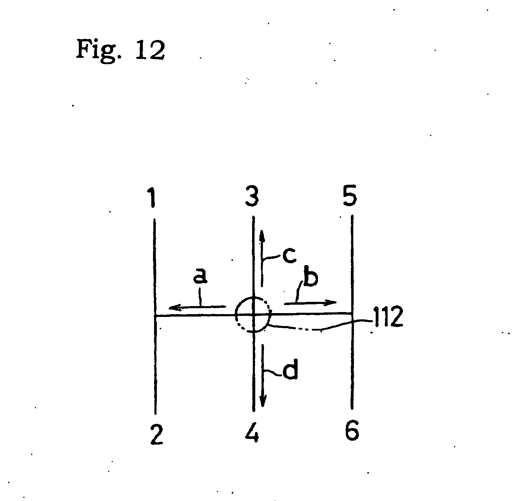

According to the above embodiment, for shifting the transmission 2, as shown in Fig. 12, the shift lever 112 may only be rocked in the directions of arrows a, b, c and d about the first axis X or the second axis Y. The shifting operation by the shift lever 112 is made extremely simple. The transmission 2 may be shifted easily and reliably. Moreover, since the first shaft 117 and second shaft 118 of the shift lever 112 formed into the cross shape, the support structure for the shift lever 112 is made very compact.

Shifting operations will particularly be described. To shift the transmission 2 to the first speed, for example, when the shift lever 112 is in the neutral position, as shown in Fig. 12, the shift lever 112 is rocked in the direction of arrow "a" about the first axis X, and then rocked in the direction of arrow "c" to about the second shaft 118.

With the shift lever 112 rocked in the direction of arrow "a" about the first axis X, the first interlocking member 126 moves in the direction of arrow a1. This causes the fork selecting shaft 135 to rotate in the direction of arrow a2. As a result, the connecting rod 136 pivots in the same direction to move the shift fork control unit 92 in the direction of arrow a3 (leftward). The control element 94 of the shift fork control unit 92 engages the first engagement part 105 of the first shift fork 47.

With the shift lever 112 thereafter rocked in the direction of arrow c to about the second shaft 118, the second interlocking member 132 moves in the direction arrow c1. This causes the interlocking rod 143 to pivot in direction of the arrow c2 about the interlocking shaft 91 to rotate the interlocking shaft 91 in the same direction. The shift fork control unit 92 pivots in the direction of arrow c2 (rearward) about the axis of the interlocking shaft 91. Consequently, the first shift rod 41 (first shift fork 47) moves from the neutral position to the rearward, first speed position. The first shifter 29 meshes with the rearward, first speed driven gear 21. Rotation of the drive shaft 5 is transmitted to the driven shaft 6 through the first speed drive gear 11, first speed driven gear 21 and first shifter 29, whereby the driven shaft 6 rotates at the first speed.

When the first shift rod 41 moves from the neutral position to the first speed position, one of the balls 79 becomes disengaged from the first engaging recess 81 of the first shift rod 41, and another of the balls 79 engages the second engaging recess 83 of the second shift rod 42. The second shift rod 42 is thereby locked immovable from the neutral position to the third speed position or fourth speed position. This is effective for reliably avoiding a situation where, when the first shift rod 41 moves from the neutral position, the control element 94 of the shift fork control unit 92 inadvertently engages also the second engagement part 106 the second shift fork 48 located immediately next to the first engagement part 105 of the first shift fork 47, thereby operating, along with the first shift fork 47, the second shift fork 48 to the third speed position.

Similarly, when the second shift fork 48 is operated to shift the transmission 2 to the third speed position or fourth speed position, the lock mechanism 75 reliably prevents the first shift fork 47 and third shift fork 49 from being inadvertently operated along with the second shift fork 48. When the third shift fork 48 is operated to shift the transmission 2 to the fifth speed position or sixth speed position, the lock mechanism 75 reliably prevents the second shift fork 48 from being inadvertently operated along with the third shift fork 49.

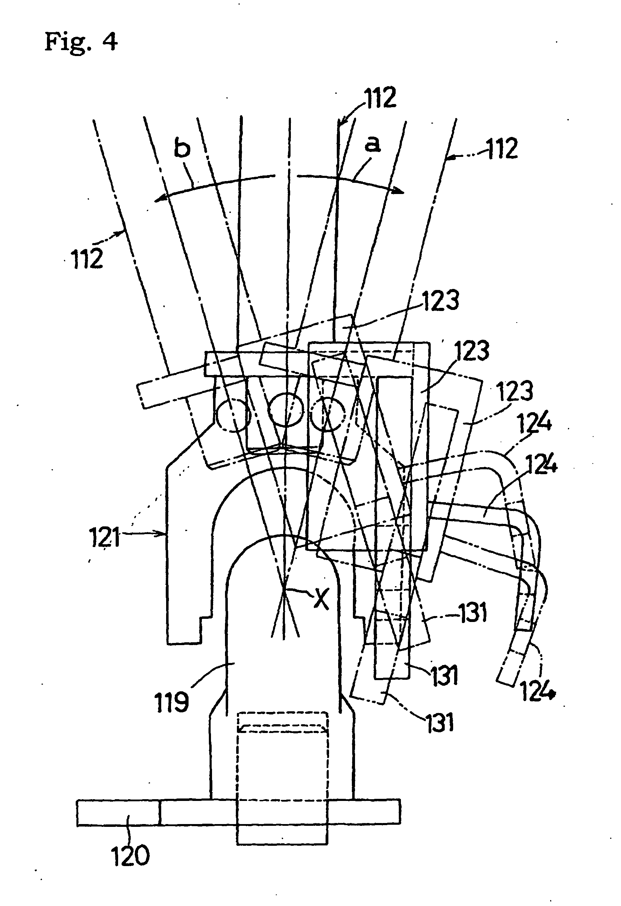

As noted hereinbefore, the connection 129 of the first interlocking member 126 to the side of the shift lever 112 is located on or adjacent the second shaft 118. Thus, when the shift lever 112 is rocked in the direction of arrow "a" or "b" about the first axis X, as shown in Fig. 4, the first interlocking member 126 moves to a large extent in the direction of arrow a1 or b1 but the second interlocking member 132 moves only slightly. Consequently, when the shift fork control unit 92 is moved transversely of the tractor body (in the fork selecting direction), the shift fork control unit 92 hardly moves in the fore and aft, fork operating direction. This is effective for reliably preventing inadvertently operations of the shift forks from when the shift lever 112 is rocked in the direction of arrow "a" or "b" about the first axis X.

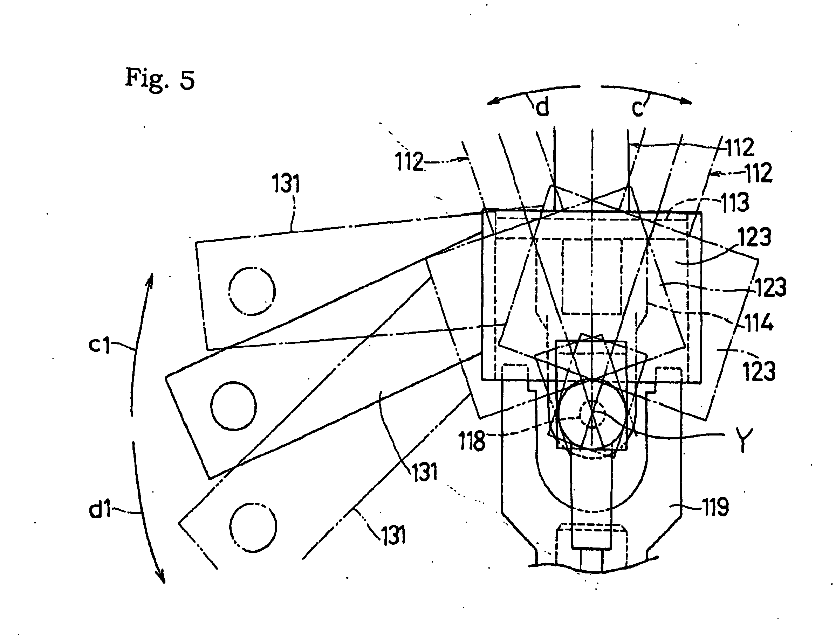

The connection 133 of the second interlocking member 132 to the side of the shift lever 112 is located on or adjacent the first shaft 117. When the shift lever 112 is rocked in the direction of arrow "c" or "d" about the second axis Y, as shown in Fig. 5, the second interlocking member 132 moves to a large extent in the direction of arrow c1 or d1, but the first interlocking member 126 moves only slightly. Consequently, when the shift fork control unit 92 is moved longitudinally of the tractor body (in the fork operating direction), the shift fork control unit 92 hardly moves in the transverse, fork selecting direction. This is effective for reliably preventing inadvertently operations of the shift forks from when the shift lever 112 is rocked in the direction of arrow "c" or "d" about the second axis Y.

The above embodiment includes the three shifters 29, 30 and 31, three shift rods 41, 42 and 43, and three shift forks 47, 48 and 49 to shift the transmission 2 to six gear ratios (first to sixth speeds). Instead, the number of each of the shifters, shift rods and shift forks may be four or more, with a correspondingly increased number of change speed gears, to shift the transmission 2 to eight (first to eighth speeds) or more stages.

## Claims

1. A shifting mechanism for a transmission having a plurality of gear ratios, with
a first shaft (117) having a first axis X;
a second shaft (118) having a second axis Y and traversing said first shaft (117) to form a cross together;
a shift lever (112) supported by said first shaft (117) and said second shaft (118) to be rockable about said first axis X and said second axis Y;
whereby a combination of rocking movement about the first axis X and rocking movement about the second axis Y of said shift lever determines one of the gear ratios of said transmission (2),
**characterized in that** a connection (129) to the side of said shift lever (112) of a first interlocking member (126) to transmit the rocking movement about the first axis X of said shift lever (112) to said transmission (2) is located on or adjacent said second shaft (118), and a connection (133) to the side of said shift lever of a second interlocking member (132) to transmit the rocking movement about the second axis Y of said shift lever to said transmission (2) is located on or adjacent said first shaft (117).

2. A shifting mechanism according to claim 1, **characterized in that** said first shaft (117) and said second shaft (118) formed integral with each other.

3. A shifting mechanism for a transmission having a plurality of gear ratios, with
a first shaft (117) having a first axis X;
a second shaft (118) having a second axis Y; and
a shift lever (112) supported by said first shaft and said second shaft to be rockable about said first axis X and said second axis Y; whereby
a particular gear ratio of said transmission (2) is produced by a combination of rocking movement about the first axis X and rocking movement about the second axis Y of said shift lever;
**characterized in that** a first shift fork (47), a second shift fork (48) and a third shift fork (49) are provided for operating said transmission (2);
a first interlocking member (126) to transmit the rocking movement about the first axis X of said shift lever (112) to said transmission (2);
a second interlocking member (132) to transmit the rocking movement about the second axis Y of said shift lever to said transmission;
the rocking movement about the first axis X of said shift lever (112) selects one of said first shift fork (47), said second shift fork (48) and said third shift fork (49) substantially through the first interlocking member (126), the selected shift fork (47, 48 or 49) being moved by the rocking movement about the second axis Y of said shift lever substantially through the second interlocking member (132), to produce two gear ratios of said transmission.

4. A shifting mechanism according to claim 3, **characterized in that:**
a shifting fork control unit (92) is provided to be reciprocable in a shift fork selecting direction in response to the rocking movement about the first axis X of said shift lever (112), and reciprocable in a shift fork operating direction in response to the rocking movement about the second axis Y of said shift lever (112);
said first shift fork (47) has a first engagement part (105) engageable by said shift fork control unit (92), said second shift fork (48) has a second engagement part (106) engageable by said shift fork control unit (92), and said third shift fork (49) has a third engagement part (107) engageable by said shift fork control unit (92); and
said first engagement part (105), said second engagement part (106) and said third engagement part (107) are aligned in the shift fork selecting direction, so that the rocking movement about the first axis X of said shift lever (112) causes said shift fork control unit (92) to engage one of said first engagement part (105), said second engagement part (106) and said third engagement part (107).

5. A shifting mechanism according to claim 4, **characterized in that** the shift fork (47, 48 or 49) engaged by said fork control unit (92) is shiftable from a neutral position to two change speed positions by the rocking movement about the second axis Y of said shift lever (112).

6. A shifting mechanism according to any one of claims 3 to 5,
**characterized in that** a lock mechanism (75) is provided to be operable, when one said first shift fork (47), said second shift fork (48) and said third shift fork (49) is operated from a neutral position in to a change speed position, for locking movement of the other shift forks from neutral positions to change speed positions.

7. A shifting mechanism according to any one of claims 3 to 6,
**characterized in that** said first shaft (117) and said second shaft (118) traverse each other to form a cross.

8. A shifting mechanism according to claim 7, **characterized in that** said first shaft (117) and said second shaft (118) formed integral with each other.

## Patentansprüche

1. Schaltmechanismus für ein Getriebe, welches eine Mehrzahl von Übersetzungsverhältnissen aufweist, mit
einer ersten Welle (117), welche eine erste Achse X aufweist;
einer zweiten Welle (118), welche eine zweite Achse Y aufweist, und welche die ersten Welle (117) quert, so dass sie zusammen ein Kreuz bilden;
einem Schalthebel (112), welcher von der ersten Welle (117) und der zweiten Welle (118) so getragen wird, dass er um die erste Achse X und die zweite Achse Y schwenkbar ist;
wobei eine Kombination einer Schwenk-Bewegung um die erste Achse X und einer Schwenk-Bewegung um die zweite Achse Y des Schalthebels eines der Übersetzungsverhältnisse des Getriebes (2) bestimmt,
**dadurch gekennzeichnet, dass** eine Verbindung (129) zu der Seite des Schalthebels (112) eines ersten Stellgliedes (126) zum Übertragen der Schwenk-Bewegung um die erste Achse X des Schalthebels (112) auf das Getriebe (2) an oder benachbart zu der zweiten Welle (118) angeordnet ist, und dass eine Verbindung (133) zu der Seite des Schalthebels eines zweiten Stellgliedes (132) zum Übertragen der Schwenk-Bewegung um die zweite Achse Y des Schalthebels auf das Getriebe (2) an oder benachbart zu der ersten Welle (117) angeordnet ist.

2. Schaltmechanismus gemäß Anspruch 1, **dadurch gekennzeichnet, dass** die erste Welle (117) und die zweite Welle (118) einteilig miteinander ausgebildet sind.

3. Schaltmechanismus für ein Getriebe, welches eine Mehrzahl von Übersetzungsverhältnissen aufweist, mit
einer ersten Welle (117), welche eine erste Achse X aufweist;
einer zweiten Welle (118), welche eine zweite Achse Y aufweist, und
einem Schalthebel (112), welcher von der ersten Welle und der zweiten Welle so getragen wird, dass er um die erste Achse X und die zweite Achse Y schwenkbar ist, wobei
ein bestimmtes Übersetzungsverhältnis des Getriebes (2) durch eine Kombination einer Schwenk-Bewegung um die erste Achse X und einer Schwenk-Bewegung um die zweite Achse Y des Schalthebels erzeugt wird;
**dadurch gekennzeichnet,**
**dass** zum Bedienen dieses Getriebes eine erste Schalt-Gabel (47), eine zweite Schalt-Gabel (48) und eine dritte Schalt-Gabel (49) bereitgestellt sind;
ein erstes Stellglied (126) zum Übertragen der Schwenk-Bewegung um die erste Achse X des Schalthebels (112) auf das Getriebe (2);
ein zweites Stellglied (132) zum Übertragen der Schwenk-Bewegung um die zweite Achse Y des Schalthebels (112) auf das Getriebe;
die Schwenk-Bewegung um die erste Achse X des Schalthebels (112) wählt die erste Schaltgabel (47), die zweite Schaltgabel (48) oder die dritte Schaltgabel (49) im Wesentlichen durch das erste Stellglied (126), wobei die ausgewählte Schaltgabel (47, 48 oder 49) durch die Schwenk-Bewegung um die zweite Achse Y des Schalthebels im Wesentlichen durch das zweite Stellglied (132) bewegt wird, um zwei Übersetzungsverhältnisse des Getriebes zu erzeugen.

4. Schaltmechanismus gemäß Anspruch 3, **dadurch**
**gekennzeichnet, dass**
eine Schaltgabel-Steuereinheit (92) so bereitgestellt ist, dass sie in Antwort auf eine Schwenk-Bewegung um die erste Achse X des Schalthebels (112) in einer Schaltgabel-Auswahl-Richtung hin-und-her-bewegbar ist, und in Antwort auf die Schwenk-Bewegung um die zweite Achse Y des Schalthebels (112) in einer Schaltgabel-Betätigungs-Richtung hin-und-her-bewegbar ist;
die erste Schaltgabel (47) einen ersten Eingreif-Teil (105) aufweist, in welchen die Schaltgabel-Steuer-Einheit (92) eingreifen kann, dass die zweite Schaltgabel (48) einen zweiten Eingreif-Teil (106) aufweist, in welchen die Schaltgabel-Steuer-Einheit (92) eingreifen kann, und dass die dritte Schaltgabel (49) einen dritten Eingreif-Teil (107) aufweist, in welchen die Schaltgabel-Steuer-Einheit (92) eingreifen kann, und
wobei der erste Eingreif-Teil (105), der zweite Eingreif-Teil (106) und der dritte Eingreif-Teil (107) in der Schaltgabel-Auswahl-Richtung fluchten, so dass die Schwenk-Bewegung um die erste Achse X des Schalthebels (112) die Schaltgabel-Steuereinheit (92) dazu veranlasst, in das erste Eingreif-Teil (105), das zweite Eingreif-Teil (106) oder das dritte Eingreif-Teil (107) einzugreifen.

5. Schaltmechanismus gemäß Anspruch 4, **dadurch gekennzeichnet, dass** die Schaltgabel (47, 48 oder 49), in welche die Gabel-Steuer-Einheit (92) eingreift, durch die Schwenk-Bewegung um die zweite Achse Y des Schalthebels (112) von einer Neutral-Position aus zu zwei Geschwindigkeitswechsel-Positionen geschaltet werden kann.

6. Schaltmechanismus gemäß einem der Ansprüche 3 bis 5, **dadurch gekennzeichnet, dass** ein Verriegelungs-Mechanismus (75) derart bereitgestellt ist, dass er betätigt werden kann, wenn die erste Schalt-Gabel(47), die zweite Schalt-Gabel (48) oder die dritte Schalt-Gabel (49) von einer Neutral-Position aus in eine Geschwindigkeitswechsel-Position betätigt wird, um eine Verriegelungs-Bewegung der anderen Schalt-Gabeln von Neutralpositionen zu Geschwindigkeitswechsel-Positionen zu bewirken.

7. Schaltmechanismus gemäß einem der Ansprüche 3 bis 6, **dadurch gekennzeichnet, dass** die erste Welle (117) und die zweite Welle (118) einander queren, um ein Kreuz zu bilden.

8. Schaltmechanismus gemäß Anspruch 7, **dadurch gekennzeichnet, dass** die erste Welle (117) und die zweite Welle (118) einteilig miteinander ausgebildet sind.

## Revendications

1. Mécanisme de changement de rapport destiné à une transmission ayant une pluralité de rapports de vitesse, comportant
un premier arbre (117) présentant un premier axe X,
un second arbre (118) présentant un second axe Y et traversant ledit premier arbre (117) afin de former ensemble une croix,
un levier de changement de rapport (112) supporté par ledit premier arbre (117) et ledit second arbre (118) pour pouvoir être basculé autour dudit premier axe X et dudit second axe Y,
grâce à quoi une combinaison d'un mouvement de basculement autour du premier axe X et d'un mouvement de basculement autour du second axe Y dudit levier de changement de rapport détermine l'un des rapports de vitesse de ladite transmission (2),
**caractérisé en ce qu'**un raccord (129) au côté dudit levier de changement de rapport (112) d'un premier élément de verrouillage mutuel (126) pour transmettre le mouvement de basculement autour du premier axe X dudit levier de changement de rapport (112) à ladite transmission (2) est situé sur ledit second arbre (118) ou de manière adjacente à celui-ci et un raccord (133) au côté dudit levier de changement de rapport d'un second élément de verrouillage mutuel (132) pour transmettre le mouvement de basculement autour du second axe Y dudit levier de changement de rapport à ladite transmission (2) est situé sur ledit premier arbre (117) ou de manière adjacente à celui-ci.

2. Mécanisme de changement de rapport selon la revendication 1, **caractérisé en ce que** ledit premier arbre (117) et ledit second arbre (118) sont formés solidairement l'un de l'autre ou d'un seul tenant.

3. Mécanisme de changement de rapport pour une transmission comportant une pluralité de rapports de vitesse, comportant
un premier arbre (117) présentant un premier axe X,
un second arbre (118) présentant un second axe Y, et
un levier de changement de rapport (112) supporté par ledit premier arbre et ledit second arbre pour pouvoir être basculé autour dudit premier axe X et dudit second axe Y, grâce à quoi
un rapport de vitesse particulier de ladite transmission (2) est produit par une combinaison d'un mouvement de basculement autour du premier axe X et d'un mouvement de basculement autour du second axe Y dudit levier de changement de rapport,
**caractérisé en ce qu'**une première fourche de changement de rapport (47), une deuxième fourche de changement de rapport (48) et une troisième fourche de changement de rapport (49) sont prévues pour actionner ladite transmission (2),
un premier élément de verrouillage mutuel (126) destiné à transmettre le mouvement de basculement autour du premier axe X dudit levier de changement de rapport (112) à ladite transmission (2),
un second élément de verrouillage mutuel (132) destiné à transmettre le mouvement de basculement entre le second axe Y dudit levier de changement de rapport à ladite transmission,
le mouvement de basculement autour du premier axe X dudit levier de changement de rapport (112) sélectionne l'une de ladite première fourche de changement de rapport (47), de ladite deuxième fourche de changement de rapport (48) et de ladite troisième fourche de changement de rapport (49) pratiquement par le biais du premier élément de verrouillage mutuel (126), la fourche de changement de rapport sélectionnée (47, 48 ou 49) étant déplacée par le mouvement de basculement autour du second axe Y dudit levier de changement de rapport sensiblement ou essentiellement par le biais du second élément de verrouillage mutuel (132) pour produire deux rapports de vitesse de ladite transmission.

4. Mécanisme de changement de rapport selon la revendication 3, **caractérisé en ce que** :
une unité de commande de fourche de changement de rapport (92) est prévue pour pouvoir aller et venir dans une direction de sélection de fourche de changement de rapport en réponse au mouvement de basculement autour du premier axe X dudit levier de changement de rapport (112), et pouvoir aller et venir dans une direction d'actionnement de fourche de changement de rapport en réponse au mouvement de basculement autour du second axe dudit levier de changement de rapport (112),
ladite première fourche de changement de rapport (47) comporte une première partie d'engagement (105) pouvant être engagée par ladite unité de commande de fourche de changement de rapport (92), ladite deuxième fourche de changement de rapport (48) comporte une deuxième partie d'engagement (106) pouvant être engagée par ladite unité de commande de fourche de changement de rapport (92), et ladite troisième fourche de changement de rapport (49) comporte une troisième partie d'engagement (107) pouvant être engagée par ladite unité de commande de fourche de changement de rapport (92), et
ladite première partie d'engagement (105), ladite deuxième partie d'engagement (106) et ladite troisième partie d'engagement (107) sont alignées dans la direction de sélection de fourche de changement de rapport, de sorte que le mouvement de basculement autour du premier axe X dudit levier de changement de rapport (112) amène ladite unité de commande de fourche de changement de rapport (92) à engager l'une de ladite première partie d'engagement (105), de ladite deuxième partie d'engagement (106) et de ladite troisième partie d'engagement (107).

5. Mécanisme de changement de rapport selon la revendication 4, **caractérisé en ce que** la fourche de changement de rapport (47, 48 ou 49) engagée par ladite unité de commande de fourche (82) peut être passée d'une position du neutre à deux positions de changement de rapport par le mouvement de basculement autour du second axe Y dudit levier de changement de rapport (112).

6. Mécanisme de changement de rapport selon l'une quelconque des revendications 3 à 5, **caractérisé en ce qu'**un mécanisme de verrou (75) est prévu pour pouvoir être mis en oeuvre, lorsque l'une de ladite première fourche de changement de rapport (47), de ladite deuxième fourche de changement de rapport (48) et de ladite troisième fourche de changement de rapport (49) est actionnée depuis une position du neutre jusque dans une position de changement de vitesse, afin de bloquer le mouvement des autres fourches de changement de rapport de la position du neutre aux positions de changement de vitesse.

7. Mécanisme de changement de rapport selon l'une quelconque des revendications 3 à 6, **caractérisé en ce que** ledit premier arbre (117) et ledit second arbre (118) se traversent l'un l'autre pour former une croix.

8. Mécanisme de changement de rapport selon la revendication 7, **caractérisé en ce que** ledit premier arbre (117) et ledit second arbre (118) sont formés solidairement l'un de l'autre.
